# EUROPÄISCHE PATENTSCHRIFT

(11) **EP 0 440 271 B1**
(45) Veröffentlichungstag und Bekanntmachung des Hinweises auf die Patenterteilung: **12.07.1995**
(21) Anmeldenummer: 91105995.4
(22) Anmeldetag: 27.11.1987
(51) Int. Cl.: B62D 5/22, B62D 5/083

(54) **Hydraulische Zahnstangen-Hilfskraftlenkung**
Rack and pinion hydraulic servosteering
Direction à crémaillère à assistance hydraulique

(30) Priorität: 06.12.1986 WO PCT/EP86/00716
(43) Veröffentlichungstag der Anmeldung: 07.08.1991
(62) Teilanmeldung aus: 87907954.9
(73) Patentinhaber: ZF FRIEDRICHSHAFEN Aktiengesellschaft, 88038 Friedrichshafen (DE)
(72) Erfinder: Elser, Dieter, W-7087 Essingen (DE); Schurr, Rudolf, W-7080 Aalen (DE)
(74) Vertreter: Raue, Reimund

(56) Entgegenhaltungen:
- DE-A- 1 933 403
- DE-A- 3 425 648

## Beschreibung

Die Erfindung betrifft eine hydraulische Hilfskraftlenkung für Kraftfahrzeuge in der Zahnstangenbauart, nach dem Oberbegriff von Anspruch 1.

In einer bekannten Hilfskraftlenkung (DE-OS 34 25 648) steht eine Lenkspindel über eine Mitnahmeeinrichtung, die ein Verdrehspiel zuläßt, mit einem Antriebsritzel in Verbindung. Das Ritzel ist mit einer Ventilhülse eines Drehschieberventils gekuppelt. Das Ritzel hat eine Durchgangsbohrung für eine Stange. Diese Stange ist an ihrem einen Ende mit der Lenkspindel und an ihrem anderen Ende in einem Drehschieber eines Drehschieberventils befestigt. Die Lenkspindel ist außerdem noch über einen die Stange umschließenden hohlen Drehstab an das Ritzel angeschlossen. Das Ritzel greift in eine Zahnstange ein, deren Bewegung durch eine vom Drehschieberventil gesteuerte Servoeinrichtung unterstützt ist. Die bekannte Lenkung hat wegen der zusätzlichen Stange und der notwendigen Stiftverbindung zwischen dem Lenkritzel und der Ventilhülse einen verhältnismäßig hohen Bauteileaufwand. Hinzu kommt eine beträchtliche Baulänge in axialer Richtung der Lenkspindel.

Der Erfindung liegt die Aufgabe zugrunde, eine Hilfskraftlenkung der angeführten Bauart mit möglichst geringen Abmessungen zu schaffen. Außerdem sollen die miteinander in Antriebsverbindung stehenden Bauteile (Zahnstange, Antriebsritzel) in einem einteiligen Gehäuse mit exakt festgelegten Abständen untergebracht sein.

Diese Aufgabe ist durch die Merkmale des Anspruchs 1 gelöst.

Nach der Erfindung bilden das Antriebsritzel und die Ventilhülse ein einstückiges Bauteil. Die Lenkspindel führt durch das einstückige Bauteil hindurch und trägt gleichzeitig den Drehschieber. Weiterhin führt der Drehstab durch eine Bohrung der Antriebswelle hindurch, wobei die Koppelung des Drehstabes mit der Ventilhülse an der Stirnseite der Ventilhülse erfolgt. Die einstückige Bauweise erlaubt es, daß sich das Antriebsritzel und die Ventilhülse nahe zusammenrücken lassen. Besondere, axialen Bauraum beanspruchende Verbindungsmittel zwischen diesen beiden Bauteilen können daher entfallen. Die Lenkspindel und der Drehstab lassen sich in dem einstückigen Bauteil axial gedrungen unterbringen, wobei die gesamte Länge des einstückigen Bauteiles für die Aufnahme des Drehstabes nutzbar ist.

Nach einem weiteren Merkmal des Anspruchs 2 ist vorgesehen, daß der Servokolben mit einer in das Antriebsritzel eingreifenden Verzahnung versehen ist, deren Eingriffsebene der Eingriffsebene der Zahnstange gegenüber liegt. Durch diese Maßnahme erhält man ein kompaktes Lenkgetriebe, welches in einem gemeinsamen Gehäuse auch den Servomotor umschließt.

Weitere Einzelheiten der Erfindung sind anhand eines in der Zeichnung dargestellten Ausführungsbeispiels näher erläutert. Es zeigen:
- Fig. 1: einen Längsschnitt durch eine Zahnstangen-Hilfskraftlenkung und
- Fig. 2: einen verkleinerten Schnitt nach der Linie II-II in Fig. 1.

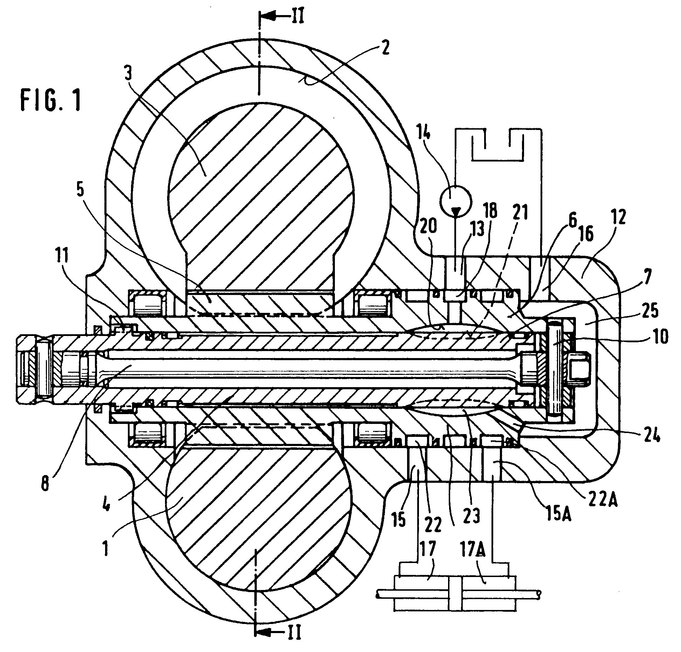

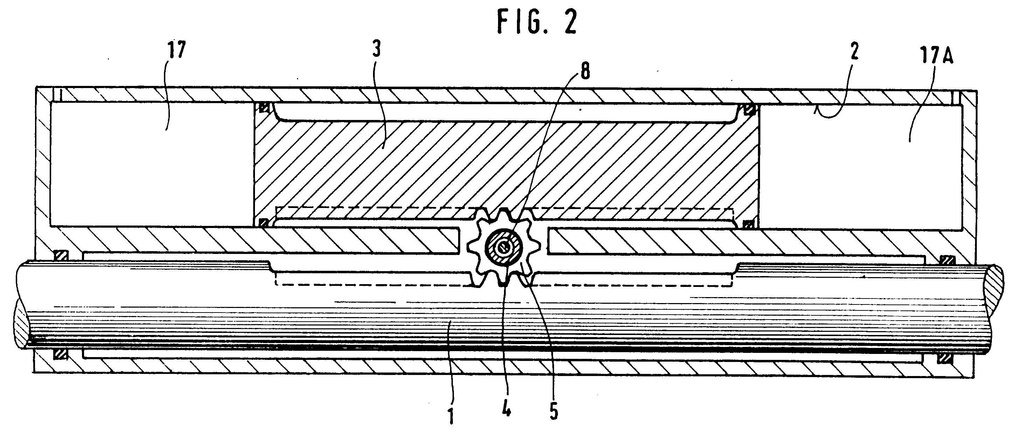

In Fig. 1 und 2 ist parallel zu einer Zahnstange 1 ein Arbeitszylinder 2 angeordnet. Die Zahnstange 1 steht über nicht gezeichnete Spurstangen mit lenkbaren Rädern in Verbindung. Die Zahnstange 1 und ein im Arbeitszylinder 2 verschiebbarer Servokolben 3 greifen nach der Erfindung mit ihren Verzahnungen, deren Eingriffsebenen sich gegenüber liegen, in ein auf einer Lenkspindel 4 gelagertes Ritzel 5 ein. Weiterhin ist nach der Erfindung das Ritzel 5 mit einer Ventilhülse 6 einteilig ausgeführt. Das untere Ende der Lenkspindel 4 ist als Drehschieber 7 ausgeführt, der sich bis in die Ventilhülse 6 hinein erstreckt, und mit dieser zusammen ein an sich bekanntes Drehschieberventil bildet. Ein am oberen Ende mit der Lenkspindel 4 verstifteter Drehstab 8 führt durch die Lenkspindel hindurch. Der Drehstab 8 ist am unteren Ende der Lenkspindel 4 mit dem einstückigen Bauteil (Ritzel 5, Ventilhülse 6) durch einen Stift 10 gekoppelt. Als Drehbegrenzung sieht man zwischen der Lenkspindel 4 und dem Bauteil 5, 6 eine mit Spiel arbeitende Verzahnung 11 vor.

Ein Gehäuse 12 hat einen Zulaufanschluß 13 für eine Hochdruckpumpe 14, zwei Arbeitszylinderanschlüsse 15 und 15A und einen Rücklaufanschluß 16. Die Arbeitszylinderanschlüsse 15 und 15A stehen mit Druckräumen 17 und 17A des Arbeitszylinders 2 in Verbindung. Der Arbeitskolben 3 unterstützt die Lenkbewegung gegenläufig zur Zahnstange 1.

Der Zulaufanschluß 13 ist über eine Ringnut 18 an axiale Zulauf-Steuernuten 20 der Ventilhülse 6 angeschlossen. Diese Zulauf-Steuernuten 20 arbeiten in bekannter Weise mit axialen Steuernuten 21 am Außenumfang des Drehschiebers 7 zusammen, die über nicht sichtbare Kanäle mit Ringnuten 22 bzw. 22A der Arbeitszylinderanschlüsse 15 bzw. 15A in Verbindung treten können. Weiter sind axiale Rücklaufsteuernuten 23 in der Ventilhülse 6 vorgesehen, die über schräge Bohrungen 24 im Drehschieber 7 an einen Rücklaufraum 25 anschließbar sind. Der Rücklaufraum 25 hat über den Rücklaufanschluß 16 mit einem Tank Verbindung.

Dreht der Fahrer an einem Lenkhandrad die Lenkspindel 4, so verdreht sich der Drehschieber 7 innerhalb des durch die Verzahnung 11 vorgegebenen Steuerweges um einen bestimmten Winkelbetrag gegenüber der Ventilhülse 6. Diese Relativverdrehung kommt dadurch zustande, daß die mit dem Ritzel 5 einteilige Ventilhülse 6 zunächst noch in ihrer Lage verharrt, da ja die Zahnstange 1 und damit auch das Ritzel durch den Lenkwiderstand der Räder festgehalten werden. Hierbei erfolgt eine elastische Verdrehung des Drehstabes 8. Durch die Relativverdrehung des Drehschiebers 7 gegenüber der Ventilhülse 6 läßt sich Drucköl in einen der Druckräume 17 oder 17A einsteuern. Die Kraft des Druckes verschiebt den Servokolben 3, der über das Ritzel 5 die Zahnstange 1 unterstützend zur Handkraft antreibt. Sobald der Fahrer mit Lenken aufhört, stellt der Drehstab 8 das Drehschieberventil 6, 7 zurück auf Mitte.

### Bezugszeichen

- 1: Zahnstange
- 2: Arbeitszylinder
- 3: Servokolben
- 4: Lenkspindel
- 5: Ritzel
- 6: Ventilhülse
- 7: Drehschieber
- 8: Drehstab
- 9: -
- 10: Stift
- 11: Verzahnung
- 12: Gehäuse
- 13: Zulaufanschluß
- 14: Hochdruckpumpe
- 15, 15A: Arbeitszylinderanschlüsse
- 16: Rücklaufanschluß
- 17, 17A: Druckräume
- 18: Ringnut
- 19: -
- 20: Zulaufsteuernuten
- 21: Steuernuten
- 22, 22A: Ringnuten
- 23: Rücklaufsteuernuten
- 24: schräge Bohrungen
- 25: Rücklaufraum

## Patentansprüche

1. Hydraulische Hilfskraftlenkung für Kraftfahrzeuge mit folgenden Merkmalen:
- eine durch ein Lenkhandrad drehbare Lenkspindel (4) steht mit einem in eine Zahnstange (1) eingreifenden Antriebsritzel (5) in Verbindung;
- das Antriebsritzel (5) ist mit einer einen Drehschieber (7) umgebenden Ventilhülse (6) verbunden;
- das aus Drehschieber (7) und Ventilhülse (6) bestehende Drehschieberventil weist als Mittenzentrierung einen Drehstab (8) auf, der das Antriebsritzel (5) durchdringt;
- der Drehstab (8) ist auf seiner einen Seite mit der Lenkspindel (4) und auf seiner anderen Seite mit der Ventilhülse (6) verbunden;
- als Anschlagbegrenzung zur Erzielung eines Verdrehspiels ist zwischen der Lenkspindel (4) und dem Antriebsritzel eine Verzahnung (11) vorgesehen,
**gekennzeichnet** durch folgende Merkmale:
- das Antriebsritzel (5) und die Ventilhülse (6) bilden ein einstückiges Bauteil;
- die Lenkspindel (4) führt durch das einstückige Bauteil (5, 6) hindurch und trägt gleichzeitig den Drehschieber (7), und der Drehstab (8) führt durch eine Bohrung der Antriebswelle (4) hindurch, und die Koppelung des Drehstabes (8) mit der Ventilhülse (6) erfolgt an deren Stirnseite.

2. Hydraulische Hilfskraftlenkung nach Anspruch 1,
dadurch **gekennzeichnet,** daß der Servokolben (3) mit einer in das Antriebsritzel (5) eingreifenden Verzahnung versehen ist, deren Eingriffsebene der Eingriffsebene der Zahnstange (1) gegenüberliegt.

## Claims

1. Hydraulic power-assisted steering for motor vehicles, having the following features:
- a steering spindle (4), which is rotatable by means of a steering wheel, is connected to a driving pinion (5) which engages into a toothed rack (1);
- the driving pinion (5) is connected to a valve sleeve (6) which surrounds a rotary slide (7);
- the rotary slide valve comprising rotary slide (7) and valve sleeve (6) has, as a central centring device, a torsion bar (8) which penetrates the driving pinion (5);
- the torsion bar (8) is connected at its one end to the steering spindle (4) and at its other end to the valve sleeve (6);
- as a stop delimitation for achieving a torsional play a toothing (11) is provided between the steering spindle (4) and the driving pinion,
characterized by the following features:
- the driving pinion (5) and the valve sleeve (6) form a single structural part;
- the steering spindle (4) passes through the single structural part (5, 6) and simultaneously carries the rotary slide (7), and the torsion bar (8) passes through a bore of the drive shaft (4), and the coupling of the torsion bar (8) to the valve sleeve (6) is effected at the front end of the valve sleeve.

2. Hydraulic power-assisted steering according to claim 1, characterized in that the servo-piston (3) is provided with a toothing, which engages into the driving pinion (5) and whose plane of action lies opposite the plane of action of the toothed rack (1).

## Revendications

1. Servo-direction hydraulique pour véhicules automobiles **caractérisée** en ce que:
- une colonne de direction (4) actionée par un volant manuel de direction est reliée a un pignon d'entraînement (5) engrenant avec une crémaillère (1);
- le pignon d'entraînement (5) est relié à une douille de soupape (6) qui entoure un distributeur rotatif (7);
- la soupape du distributeur rotatif constituée de la douille de soupape (6) et du distributeur rotatif (7) comporte au milieu une barre de torsion (8) centrée qui traverse le pignon d'entraînement (5);
- une extrémité de la barre de torsion (8) est reliée à la colonne de direction (4) et l'autre à la douille de soupape (6);
- afin d'obtenir un jeu rotatif, comme limite de butée on utilise une denture (11) entre la colonne de direction (4) et le pignon d'entraînement,
**caracterisée** en ce que:
- le pignon d'entraînement (5) et la douille de soupape (6) forment un seul élément;
- la colonne de direction (4) traverse cet élément (5, 6) et porte en même temps le distributeur rotatif (7); la barre de torsion (8) traverse un perçage de l'arbre d'entrée; et l'accouplement de la barre de torsion (8) à la douille de soupape (6) s'effectue sur sa face frontal.

2. Servo-direction hydraulique suivant la revendication 1, **caractérisé** en ce que:
le servo-piston (3) est pourvu d'une denture engrenant avec le pignon d'entraînement (5), dont le plan d'engrènement est parallèle au plan d'engrènement de la crémaillère (1).
